# EUROPEAN PATENT SPECIFICATION

(11) **EP 4 054 062 B1**
(45) Date of publication and mention of the grant of the patent: **09.12.2026**
(21) Application number: 22156268.9
(22) Date of filing: 11.02.2022
(51) Int. Cl.: H02K 15/02, H01F 41/02

(54) **METHOD AND PLANT FOR THE FORMATION OF ROTORS OR STATORS OF ELECTRIC MOTORS CONSISTING OF PACKS OF SHEETS WITH SUBGROUPS OF SOLIDARIZED SHEETS**
VERFAHREN UND ANLAGE ZUR HERSTELLUNG VON STATOREN ODER ROTOREN VON ELEKTROMOTOREN AUS BLECHPAKETEN MIT UNTERGRUPPEN VON VERFESTIGTEN BLECHEN
PROCÉDÉ ET INSTALLATION DE FORMATION DE STATORS OU DE ROTORS DE MOTEURS ÉLECTRIQUES CONSTITUÉS DE PAQUETS DE FEUILLES AVEC DES SOUS-GROUPES DE FEUILLES SOLIDARISÉES

(30) Priority: 16.02.2021 IT 202100003434
(43) Date of publication of application: 07.09.2022
(73) Proprietor: Dema S.r.l., 17019 Varazze (IT)
(72) Inventor: LIBRICI, Cesare, Savona (IT)
(74) Representative: Karaghiosoff, Giorgio Alessandro

(56) References cited:
- EP-A1- 2 487 779
- DE-A1- 102018 122 047
- JP-A- 2019 033 595
- US-A- 4 073 373
- US-A1- 2020 161 946

## Description

The present invention relates to a method and a plant for implementing such a method applied to the formation of rotors or stators of electrical machines.

A common way of realizing such an armature is by superimposing a number of metallic sheets having magnetic properties that, when assembled, form a (rotoric or statoric) pack of sheets also called laminations pack.

A laminations pack realized in this way has important advantages compared to other constructive solutions, such as the obvious reduction of eddy currents and therefore a greater electrical and thermal efficiency.

It is known to automate partially or completely the formation of laminations packs in plants dedicated to this purpose, which assemble a plurality of sheets taken from an input magazine by overlapping and connecting them to each other with a thermal and/or mechanical process such as by realizing one or more welds in order to join the sheets of the pack or by clamping with third elements or even by interlocking of the sheets by through pins or tongues arranged transversally to several sheets and cooperating with slots previously obtained in the sheets themselves.

At the state of the art are known different methods and plants designed for the realization of laminations packs obtained by assembling and successively connecting a plurality of preformed sheets, which sheets are taken from one or more magazines according to specific devices intended to optimize the speed and efficiency of execution.

Document US2020161946A1 teaches about lamination pack (referred as "core product") and related manufacturing method wherein a pack is assembled composing two or more blocks, each one composed by a plurality of steel sheets bonded together by welding or resins or adhesive layers. Each block is also characterized by having recesses to contain magnetic elements which are integrated within the block by resins; also, the manufacturing plant is provided with means to compose and stack different blocks which are assembled in the final lamination pack alternating blocks orientation along the longitudinal axis of the pack.

Document JP2019033595A describes an iron core manufacturing apparatus and method designed to improve efficiency of lamination pack assembly where the manufacturing apparatus comprises a rotating table where groups of metal sheets are stacked together, bonded and removed in a continuous mode operation. The final lamination pack is composed by a plurality of said groups (10A, 10B, 10C) coupled together. The document does not explain the reason for making different blocks successively connected together to reach the final consistency (i.e. axial length) of the lamination pack but it is reasonable to assume that the combination is needed when the assembly capacity of the devices along the rotating table for a single block of sheets is below the overall size of the pack to be assembled; moreover, the document does not explain how the subassembly process can take care of the precision in terms of total axial length to be reached nor the coplanarity of the top and bottom faces of the pack.

With regards to the devices and methods for providing a way of solidarization of the metal sheets, DE102018122047A1 offers different options for connecting metal sheets parts to form laminated cores with different adhesive layers to be applied to the sheets.

EP2487779A1 discloses forming subgroups of laminations and adjusting the number of laminations to achieve a desired axial length, focusing on dimensional precision.

WO2020/021472 is also relevant, wherein a method is described for automatically forming packs of metal sheets, for forming armatures of electrical machines, or the like, by an automatic precision batching of a pack of sheets consisting in picking up and separating a predetermined number of sheets, corresponding to a predetermined height of said pack, from a stack of sheets having a greater height than said pack and comprising the following steps:
- grasping at one end of the stack of sheets a predetermined number of sheets corresponding to the height of the pack of sheets,
- separating of said number of sheets of the pack from said stack of sheets by relative axial distancing of the pack from the stack of sheets by a predetermined distance,
- performing a separation action of one or more of the sheets at the end of said pack of sheets facing the stack of sheets, which possible last sheet or which possible last sheets have been erroneously adhered to a sheet of the pack of sheets intended to be the last sheet of said pack, being the said one or more possible last sheets precariously tightened for a part of their thickness or moderately adhering to the lower sheet of the pack of sheets while they are instead intended to constitute the first sheet of the stack of sheets facing the separated pack of sheets,
- collecting said or said eventual detached sheets on the end of the stack of sheets facing the pack in a position axially aligned with the sheets of said stack.

This document further provides that the sheets forming the pack or packs required to make the armature are then solidarized together into a block by means of a thermal/mechanical connection in order to join the single sheets of the pack, for example by means of a plurality of weld beads or weld lines oriented in the axial direction of the sheet pack or packs and provided at two or more angular positions of the outer and/or inner mantle surface of the sheet pack or packs provided for the armature.

This connection method through welding is commonly used in the assembling of armatures as it is easy to realize, economical and extremely long-lasting and high-performing in the task of keeping together the sheets constituting the pack. It is preferably carried out using several weld beads executed in a transverse direction and preferably parallel to the assembling axis of the pack, arranging several weld beads in different angular positions of the side surfaces of the pack of sheets.

A limitation of this technique is that the weld beads, if positioned in particular areas of the pack, can affect the magnetic performance of the armature obtained in this way. In particular, it is preferable to avoid welding in correspondence with or in proximity to the laminations that provide the polar expansions, since this would introduce a degradation factor of the electromagnetic field that cannot be tolerated in high-performance electric motors.

In a stator armature, for instance, it would be impossible to perform welds on the inner mantle surface, thus limiting the useful areas for joining to the outer mantle surface.

Consequently, some portions of a sheet remain distant from the welding beads and therefore only weakly constrained to the corresponding areas of the preceding and following sheets; downstream of the stacking, the compression and the welding process, therefore, it is possible to find deviations of some areas of the sheets from the geometric plane in which they originally lay and this phenomenon is more evident for the elements present at the ends of the pack. Usually, this results in a variation of coplanarity between the upper and lower sheets. That is, the distance between two corresponding free (non-welded) regions of the lower and upper sheets is different than two corresponding connected (welded) regions of the same sheets.

This lack of coplanarity, which is more or less pronounced according to the variation of the overall dimensions of the armature and/or of the mechanical characteristics of the single layer composing the pack, leads to problems of production quality in the subsequent stages of the implementation process of the electric motor, such as, for example, in the realization of the insulation in the slot and of the windings or the encapsulation of the armature in special casings.

The object of the invention is therefore to realize assembled laminations packs by improving the coplanarity of the sheets constituting the pack and to compensate deviations in a substantially axial direction of the ends of the sheets spaced from the welding regions.

The invention overcomes these and other limitations through a method for making packs of metal sheets forming rotors or stators of electric machines, the method being defined in claim 1.

Thus, the method object of the invention contemplates the use of one or more adhesion substances applied to a subgroup of the sheets of the pack constituting the rotor or stator armature of an electrical machine or the like. The application of the adhesion substances is provided to solidarize a known number of sheets intended to constitute the pack of sheets, and preferably this number is chosen to be less than the total number of sheets in the pack.

In an embodiment further described below, it is provided that the final pack of sheets is composed of a plurality of sheets selected and stacked individually or in blocks in a quantity less than the quantity necessary to constitute the armature, and it is further provided that this plurality of sheets is comprised between two presolidarized blocks of sheets arranged at the axial ends of the armature as assembled.

In this embodiment, the plurality of sheets thus constitutes a central subgroup which does not necessarily have to be provided with adhesive between one sheet and the other since it remains compressed between the two presolidarized blocks and joined to them by one or more welding beads as traditionally known.

A set of solidarized sheets is herein referred to as a subgroup in the sense that among other things, the sheets of said subgroup are a subset of the total number of sheets intended to constitute the armature of the electric motor or the like.

Here it is understood that the pack of sheets is made by superimposing a known number of flat sheets having the same geometric shape and that such sheets are stacked along an assembling axis orthogonal to the plane of each sheet.

It is provided that several subgroups of sheets are realized within the same pack, as also foreseen in one or more embodiments described below.
The action of the solidarizing substance, hereafter also referred to as the solidarizing agent, is preferably applied in the regions of the sheets that are most distant from the mechanical joining regions (welding, crimping or other) of the pack. In the exemplary and non-limiting case of a stator with weld beads, wherein the welds are applied to the outer mantle surface, the adhesion substance is preferably disposed in one or more regions of the sheet tongues forming the polar expansions.

This overcomes the technical problem described above, resulting from the impossibility of realizing welding beads in particular regions of the sheets, such as, for example, those in correspondence with or near the polar expansions of a stator, by using adhesive agents that make it possible to mutually constrain even the zones most distant from the welding beads. In this and other embodiments described herein, reference may be made to welding processes for the transversal joining of all or part of the sheets. The solidarization, understood as the action resulting in the formation of a block of sheets mutually linked by means of adhesion substances, occurs separately to the generic assembling steps of the pack.

The subgroups of sheets are selected, assembled and solidarized separately from the pack, steps being provided for picking up, assembling and solidarizing a known quantity of sheets in an amount constituting the at least one subgroup and subsequent steps being provided for stacking one or more solidarized subgroups together with a plurality of non-solidarized sheets in the quantity that is necessary to form the pack of sheets.

According to the invention, one or more subgroups of solidarized sheets are previously produced, which subgroups are successively assembled with other non-solidarized sheets chosen in such a quantity as to reach the final and predefined number of elements that according to the project realize the body to be produced.

Accordingly, the method involves the production of one or more solidarized subgroups of sheets in advance of the production of the pack. This production may take place in a dedicated production area, which may not coincide with the manufacturing site of the pack and/or may be shared between several final sites for the assembling of the pack.

For example, it is possible to provide specialized production sites or production areas of a site that are specialized in the production of solidarized subgroups which are stored and/or distributed for a later incorporation step of the pack.

In a preferred variant of the method, said subgroups of sheets are provided at one or both opposite ends of the pack of sheets.

According to this last variant, the method for forming armatures from packs of sheets described above includes an embodiment comprising the following steps:
- defining a number of sheets required to form a pack of mutually stacked sheets having a predetermined axial dimension, i.e. in the direction of stacking;
- the said number of sheets being calculated on the basis of the thickness of the sheets and the desired or target axial dimension of the pack of sheets;
- defining a first subgroup of sheets comprising a predetermined number of sheets less than the total number of sheets calculated in the previous step;
- solidarizing the sheets of said subgroup according to one or more of the variants previously described for the previous solidarization of the sheets of a subgroup of sheets;
- adding to the subgroup of sheets a predetermined number of sheets in such a quantity as to generate a partial pack of sheets whose axial dimension is less by a predetermined amount than the desired axial dimension of the complete pack of sheets;
- verifying by measurement at the end of said step and/or at regular intervals the axial dimension of said partial pack of sheets;
- comparing said measured value with the preset value of the axial dimension of said partial pack of sheets;
- calculating, on the basis of the difference of the aforementioned measured and preset values of the axial dimension of the partial pack of sheets, the number of sheets required to form at least one further subgroup of sheets required to generate a complete pack of sheets with the preset or desired axial dimensions, and
- selecting said number of sheets for said subgroup of sheets, solidarizing the sheets of said subgroup according to one or more of the alternatives described above for the previous solidarization of the sheets of the subgroups;
- adding the subgroup to the partial group of sheets as an end subgroup to complete the full pack of sheets;
- solidarizing together all the sheet metal of the at least two subgroups of presolidarized sheets at the initial and final ends of the pack of sheets and of the part of the pack of sheets interposed between said at least two presolidarized end subgroups.

Selection and picking of the number of sheets for at least one of the subgroups of presolidarized sheets takes place by magnetic attraction of individual sheets and deposition thereof by repulsion or by suction pick-up by means of a vacuum head and releasing by cessation of the vacuum, while selection and picking of the sheets of at least one further subgroup of sheets, which are optionally not presolidarized with each other, is carried out by mechanical selection and pick-up.

In the present description and the subsequent claims, it is described and claimed a preferred method of mechanically selecting and picking up sheets which can be provided as a preferred solution for implementing the above-mentioned step of mechanically selecting and picking up sheets.

According to an embodiment, the sheets of the two subgroups of presolidarized sheets provided at the head ends of the pack of sheets are selected and picked up magnetically or by suction, while the sheets that are provided in the part of the pack interposed between said two end subgroups are selected and picked up by mechanical selecting and picking.

As already mentioned above, the pack of sheets is made by superimposing a known number of flat sheets having the same geometric shape and such sheets are stacked along an assembling axis orthogonal to the plane of each sheet; consequently, it is possible to identify two ends of the pack of sheets, as well as a first and a last sheet or a lower sheet and an upper sheet, which are characterized by having the greatest mutual distance between all of the elements constituting the pack.

From the description of the technical problem that the invention intends to solve, the sheets placed at the ends are those which suffer from greater discrepancy of planarity, in addition to forming the lower and upper surfaces of the complete armature. Advantageously, the application of the method allows to obtain a structure in which the sheets at the ends are incorporated in a solidarized subgroup also in the regions distant from the welding beads, ensuring greater conformity of the structure and acting as a stabilization element also for the single sheets located between the two blocks at the ends of the pack, i.e. the lower block and the upper block of the stack that makes up the pack.

In a further embodiment, an in-line or serial process is provided, wherein the assembling of the pack of sheets takes place previously and separately from the forming of the pack of sheets. This variant finds a possible application within the plant itself, preferably provided with substations that process the sheets producing a sequence of complete packs of sheets.

This variant can be combined with one or more of the other embodiments and is contextualized in an extremely advantageous way in a sequence of steps, wherein inside an assembly station is initially positioned a first subgroup of sheets provided with a solidarizing agent, on which it is superimposed a known number of single sheets (possibly moved in blocks) and finally a second subgroup of sheets provided with a solidarizing agent.

A sub-variant of the invention provides that the solidarizing agent or adhesion substance is positioned on a part of the mutual contact surfaces of the sheets simultaneously with the stacking of said sheets in an assembly station and that the same station is subsequently able to arrange single sheets (not solidarized) in the same stack and within the same manufacturing process of the pack of sheets.

An alternative sub-variant to the previous provide instead that the subgroups of solidarized sheets are previously processed and then diverted to the assembly station as soon as said operation has been completed.

The adhesion substances comprise a glue or adhesive localized on one or both surfaces of mutual contact of the single sheet, for example, by depositing it only on the top surface of a sheet, preferably during the stacking step, independently of the execution of this step before or during the assembling of the pack, or on both faces of the sheet. In this latter case it is possible to use bi-component products which make the solidarizing agent operative when the upper surface of a first sheet is in contact and/or pressing with the lower surface of a second sheet.

The substances of mutual adhesion are pre-activated in their solidarizing action or can be activated when subjected to known specific environmental conditions.

Such adhesives include, for example, thermo-activatable or anaerobic products, which only exert their adhesive force in a specific activation step and can advantageously be combined with method variants concerning the preparation of the subgroup of sheets and is used as non-limiting example in a process that provides for the ordered and centered positioning of all the sheets of the pack in a stack of an assembly station, after which the pressing and cross-welding process is performed. The pressing and/or welding operation may concurrently contribute to the activation of the anaerobic or bi-component adhesive and/or the thermo-activation of a thermo-activatable adhesive.

However, it is also possible that activation of adhesion substances is performed partially or totally before welding.

Optionally, at least part of the sheets constituting said one or more subgroups are pretreated with one or a combination of said mutual adhesion substances.

This includes, without limitations, the treatment of sheets with the coating of specific adhesive substances such as the technology commercially known as Backlack^{®}.

In general, this situation includes the case where at least part of the sheets joins the reinforcement construction process having already applied an adhesive for the subsequent solidarization of the subgroups. Advantageously, this realization is accompanied by the use of adhesive materials that are essentially inert when under normal environmental conditions and are activated when subjected to known conditions under which the adhesive exerts its bonding effect. Usually, the activation conditions are an increase of the temperature or the provision of energy in form of heat and the increase of pressure.

The invention refers also to a plant for the automated production of packs of sheets, the plant being defined in claim 8.

According to a first variant of the plant object of the invention, the grouping station comprises the further substation for solidarizing said subgroup of sheets.

The invention thus provides for the presence in the plant of a station for the production of subgroups of sheets having adhesion substances in order to join the sheets in one or more solidarization regions, which adhesion substances are activated in their solidarizing action to form mutually solidarized subgroups of sheets. The adhesive substance can be interposed between one sheet and the other or the sheet may have already been treated or purchased directly from external manufacturers to thus contain the adhesive on at least part of the surfaces. The case of sheets marketed with treatment Backlack^{®} falls into the latter type.

According to the invention, the solidarization is performed previously to the application of said welding bead.

The solidarization, which is the activation of the solidarizing agent applied to the sheets of the subgroup or subgroups of sheets, takes place in temporal proximity to the pressing and welding process. Advantageously, the same assembly and welding station operates by assembling and solidarizing the pack of sheets both with the physical action of welding and with the activation of the substances operating in the regions of the sheets lying far from the welding regions.

According to a variant, said grouping station comprises a further substation for the interposition of one or more adhesion substances between the elements of the stack which forms the subgroup of sheets.

According to another variant, a second grouping station of subgroups of sheets is provided, operating according to one or more of the features of the aforementioned grouping station, which second grouping station realizes a second subgroup of sheets that is also intended to compose said pack of sheets.

This embodiment of the system is particularly advantageous for the application of the corresponding method in the variant in which two subgroups of sheets applied to the ends of the pack are provided. As will be evident from the drawings, such a plant is able to sequentially assemble all the sheets of the pack according to a manufacturing progression that comprises the positioning of the sheets of a first lower subgroup, to which a known quantity of single sheets (taken from blocks of single non-solidarized sheets) are superimposed, to which in turn a second upper subgroup of solidarized sheets is superimposed. The quantities of the sheets constituting the two subgroups and the quantities of the single interposed sheets are such as to achieve the overall consistency of the pack of sheets.

The pack of sheets thus obtained has therefore the advantage of presenting an excellent coplanarity of the sheets assembled in it, thereby compensating for deviations in an essentially axial direction of the ends of the sheets distanced from the welding areas. In fact, the arrangement at the ends of the armature of two subgroups already solidarized and perfectly coplanar is able to significantly limit the transversal deformations that instead occur in the known assembling and welding systems where, as described above, the execution of weld beads on the outer surface of the armature causes unwanted deformations of the assembly and therefore a lack of coplanarity between the faces at the axial ends of the finished product.

According to a further variant, the selection, separation and pick-up substation is equipped with pick-up means of the mechanical and/or magnetic type and/or operating by suction cup effect, said means of the mechanical type being used for picking up the single sheets and said means of the magnetic type or operating by suction cup effect being used for picking up the subgroups of solidarized sheets or vice versa. Therefore, this variant involves different types of lifting means and these types can be used depending on the object to be picked up. In particular, since one of the main features of the invention is the definition of subgroups of sheets in order to constitute the armature by stacking together with single sheets, it was found to be advantageous to use different mechanical means for lifting the single sheet or for lifting a subgroup provided with solidarizing substances of the same sheets. Depending on the different physical characteristics (such as weight and thickness of the smallest unit to be handled) it is advantageous to differentiate the means involved in lifting. As will be better specified later, the means of mechanical type can be radial clamping grippers that grasp the element and drag it individually upwards. Magnetic devices are, for example, electromagnets activated by command and synchronized with translating elements that lift the element anchored to them and bring it towards the stack of the assembly station.

Alternatively or in combination with magnetic devices, devices operating by suction effect are foreseen, having one or more suction bodies coming into contact with a flat surface of the sheet or of the pack of sheets, and having one or more driven organs to depressurize the chamber formed between the suction cup and such flat surface, so that the lifting of the suction bodies causes the lifting of the sheet or sheets.

According to a possible embodiment of the plant, the said selection and separation station comprises:
- a radial clamping gripper of blocks of sheets of known quantity coming from a stack, which can be switched alternatively in the clamped condition of at least part of the sheets of a pack of sheets and in a condition of non-interference with the sheets;
- translators of said clamping gripper for positioning said gripper relative to the end of said stack of sheets corresponding to a predetermined number of sheets;
- a detaching/scraper nail or finger that can be moved along a path with which said finger or said nail separates the sheet erroneously adhering to a sheet of the block of sheets intended to be the last sheet of said block, being the said one or more possible last sheets precariously tightened for a part of their thickness or moderately adhering to the lower sheet of the block of sheets, while they are instead intended to constitute the first sheet of the stack of sheets facing the separated block of sheets, wherein the said detaching/scraper nail or finger cooperate with an axial band of the perimeter of the sheets of the block of sheets coinciding with a single point of the perimeter of the said sheets, and a separator knife being provided which is moveable supported in a radial direction with respect to the axis of the block or stack of sheets and in a position coincident or adjacent to said axial band of the perimeter of the sheets, and which knife is supported further angularly displaceable around the axis of the block or stack of sheets on a path along at least part of the outer perimeter of said sheets, a control unit being provided which activates said translators, said gripper, said scraper finger or nail and said separator knife and which carries out a control program which comprises instructions for performing the functions provided by the method according to one or more of the preceding claims.

According to a possible embodiment of the plant, the said sheets have a plan shape which can be inscribed in a circle, while the said knife is supported angularly displaceable on a path corresponding to an arc of a circle coaxial to the axis of said circle.

According to a possible embodiment of the plant, the selection and separation station is provided at the upper end of the stack of sheets, at a predetermined distance therefrom.

These and other characteristics and advantages of the present invention will become apparent from the following description of some embodiments shown in the attached drawings:
- Figures 1a and 1b illustrate an assembled pack of sheets constituting a stator of an electric motor shown respectively in a three-dimensional perspective view and in a front view;
- Figures 2a and 2b illustrate a pack of sheets similar to the previous one but with separate subgroups, emphasizing a possible arrangement of an adhesion substance;
- Figure 3 illustrates an embodiment of a plant for making packs of sheets in accordance with the invention.

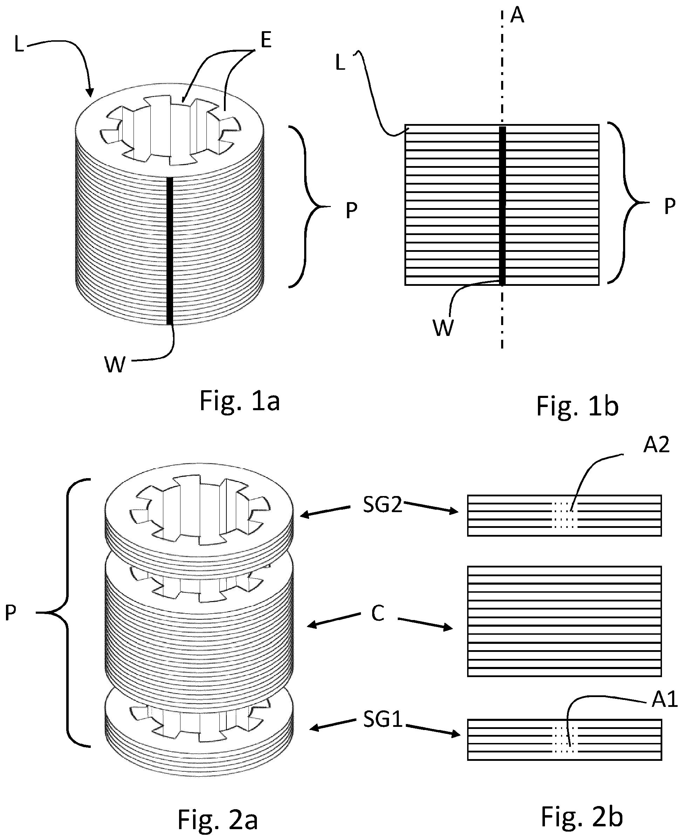

With reference to figure 1a, it is shown an exemplary perspective representation of a pack P of sheets constituting the armature of an electric motor stator.

The pack P of sheets is obtained by superimposing a known number of metal sheets of similar shape, where the single metal sheet is indicated with L and is stacked to form said pack P of sheets.

In the sheet L is defined a plurality of teeth E which will form the polar expansions of the stator. Size, quantity and shape of the teeth are in this case purely indicative and will be chosen according to the design choices suited to the specific performance of the electric motor.

In the representation of the various figures, the single sheet L as well as the stator corresponding to the pack P of sheets has a rotational symmetry, without limiting to the application of the method or to other embodiments of the plant.

W indicates a generic weld bead executed transversely to the plurality of sheets L and parallel to the assembling axis A (shown in Figure 1B). Advantageously there may be further welding beads not shown in the figure, angularly spaced from the weld bead W.

In the real case, it has been observed how the stacking of a substantial number of sheets L, for example of many tens or hundreds of elements, gives rise to deformations of the sheets in their regions that are farthest from the weld beads. The invention has among its objectives the elimination or at least the reduction of these deformations, which can be found in the form of a lack of coplanarity between the first and last sheet of the pack.

Figure 1b shows the same pack P of sheets according to a two-dimensional perspective from a plane parallel to the assembling axis A and positioned externally to the pack P of sheets. As in the previous figure it is shown a plurality of sheets L overlapping and aligned along the assembling axis A.

Figure 2 shows a similar pack P of sheets in the state of semi-finished product, which pack P, according to a variant of the method object of the invention, is composed of two subgroups of sheets SG1 and SG2 which are arranged at the ends of the pack P of sheets, which pack P of sheets being finished by a known number of non-solidarized sheets to form the block of sheets C which is interposed between the two subgroups of integral sheets SG1 and SG2.

As figuratively visible in figure 2b, the subgroup of sheets SG1 is obtained by applying a solidarizing agent A1 in a similar way to the subgroup SG2 with the solidarizing agent A2. A1 and A2 will be advantageously applied in regions distant from the region of the sheet that is involved by welding W and preferably in proximity to the polar expansions on the inner mantle surface of the stator, which polar expansions are not welded to avoid undesirable effects to the electromagnetic field and the worsening of performance of the electric motor. It is worth repeating that the subgroups of SG1 and SG2 sheets can be treated with adhesion substances and previously solidarized or they can still be waiting for the activation of the solidarizing agents A1 and A2.

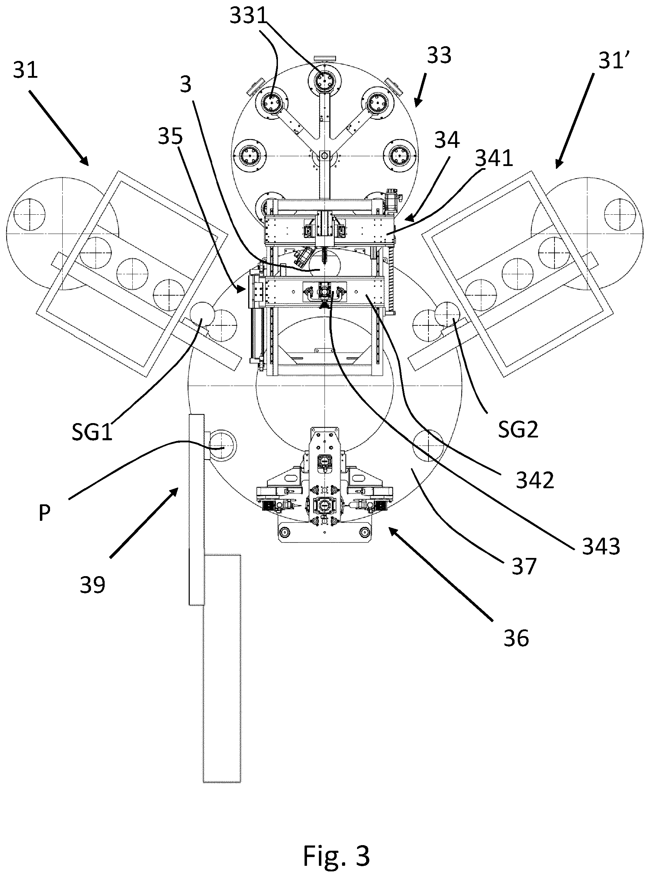

Figure 3 finally shows a plan view of a possible embodiment of a plant for automated manufacturing of packs P of sheets by stacking and welding a predefined number of individual metal sheets L, comprising a first grouping station 31 for forming subgroups of sheets SG1, a selection and separation station 34 for selecting from a vertical magazine 33 a plurality of sheets L to form the central block C of the pack P of sheets, a second grouping station 31' for forming subgroups of sheets SG2, a station for the mechanical joining 36 and an unloading station 39 of the complete assembly.

The pack P of sheets is assembled in an assembly magazine 3 on which the sheets L that will form the pack P of sheets are stored, and which magazine is provided with guides for centering said sheets and is possibly shaped and/or provided with means for precisely stacking the sheets L so that all the sheets L of the pack P are coaxially arranged.

The assembly magazine 3 is arranged on the peripheral band of a rotating table 37 acting as a conveyor/feeder for a plurality of such assembly magazines 3. As the rotating table 37 rotates, moved by an electric motor with controlled actuation, it transports the assembly magazines from one station to another so as to allow repetition of the assembling process of several pack P of sheets in the intended sequence of macro-steps:
- - positioning of the lower subgroup SG1;
- - positioning of several sheets L of the central block C;
- - pressing of the central block of sheets C.
- - positioning of upper subgroup SG2;
- - applying welding beads W
- - unloading.

The grouping station 31 includes a substation for selecting, separating, and picking up a predetermined number of sheets from a magazine, a substation for stacking sheets to form the subgroup consisting of the sheets picked up in the previous step, a substation for transferring to the assembly magazine 3 a subgroup of sheets SG1 grouped into the substations of the grouping station 31. For the forming of a subgroup of sheets SG1, at least one substance of mutual adhesion is provided for the solidarization of the subgroup of sheets.

The selection and separation station 34 selects from a vertical magazine 33 a plurality of sheets L to form the central block C of the pack of sheets P by taking them from a plurality of stacks 331 of sheets overlapping each other; in each stack 331 there are several sheets L which are selected in a known and predefined amount by the selection and separation station 34, by separating them from the rest of the stack of sheets 331.

The selection and separation station 34 includes, in a position vertically aligned with the stack 331 of sheets, selectors/separators mounted together on a common frame including a first carriage 341 slidable between said station 34 and a further assembly station 35 aligned along the direction of translation of the carriage 341.

The station 35 is provided in a position aligned with the path of the carriage 341 and includes at least one assembly magazine 3 on which the sheets L forming the pack P of sheets are deposited.

In a position vertically aligned and/or axially coinciding with the assembly magazine 3, i.e. with the packs of sheets deposited on the same, in the station 35 there is provided a presser organ which is also displaceable by means of a carriage 342 in the direction of translation of the carriage 341 which carries the selecting/separating organs.

The carriage 341 carries a slide that controls the lifting from and the sinking against the pack or the packs P of sheets stored in the assembly magazine 3 of said presser member 343.

In combination with station 35, there is provided a conveyor/feeder of a plurality of assembly magazines that are moved between said assembly station 35 and at least one unloading station 39 of the finished armature. The conveyor/feeder of the shown embodiment is formed by a rotating table, designated by 37, which is also horizontal and on the peripheral band of which a plurality of assembling magazines 3 are angularly spaced. A motor with a transmission drives the table 37 in rotation.

In the joining station 36 disposed at an intermediate position between the assembly station 35 and the unloading station 39, there are provided one or more welding tools, not illustrated in detail, which perform a weld line or weld bead in a transverse direction, preferably in a direction parallel to the axis of the pack or packs of sheets in the assembling magazine 3 and in a pressed condition.

Two or more weld lines or two or more weld beads may be provided at different angular positions of the outer mantle surface of the pack or packs of sheets.

The welding tools may be of any type, such as arc-welding tools, plasma-welding tools, laser-welding tools, or other types, and are generally known at the state of the art in this field, as well as any support and displacement mechanisms along the pack or packs of sheets.

The second grouping station 31' includes, in a similar manner to the first grouping station 31, a substation for selecting, separating, and picking up a predetermined number of sheets from a magazine, a substation for stacking sheets to form the subgroup SG2 consisting of the sheets picked up in the previous step, a substation for transferring to the assembly magazine 3 a subgroup of sheets SG2 grouped in the substations of the grouping station 31'. For the forming of a subgroup of sheets SG2, at least one substance of mutual adhesion is provided for the solidarization of the subgroup of sheets.

Depending on the variants of the method described above, the substations 31 and 31' can operate limitedly to the steps of positioning subgroups of already preformed and pre-solidarized sheets SG1 and SG2, or can include the steps of solidarization (for example by thermal and/or mechanical activation) of the adhesion substances.

From the above description, it is therefore clear that the tool according to the invention fully achieves the intended purposes.

The object of the invention is susceptible to numerous modifications and variations, all of which fall within the protection scope as defined by the claims. All the particularities can be replaced by other technically equivalent elements, and according to the needs, the materials can be different without departing from the scope of the present invention.

Even if the object has been described with a particular reference to the annexed figures, the reference numerals used in the description and in the claims are used to improve the comprehension of the invention and do not constitute any limitation to the scope of protection claimed.

## Claims

1. Method for making packs (P) of metal sheets forming rotors or stators of electric machines by stacking and connecting in a stable way a predetermined number of metallic sheets (L) along at least two weld beads (W) opposing one another or at different angular positions, comprising the steps of
- providing, for at least a subgroup (SG1; SG2) of said sheets constituting the said pack (P) of sheets, at least at one region of the reciprocal contact surfaces of the sheets, substances of mutual adhesion (A1; A2) for the solidarization of the sheets of the subgroup, which substances can be activated by chemical-physical action,
wherein the reciprocal solidarization of the sheets of the at least one subgroup (SG1; SG2) of sheets is carried out before the stacking with the remaining sheets of the pack (P),
being the at least one subgroup (SG1; SG2) of sheets selected, assembled and solidarized separately from the pack (P),
being provided steps for picking up, assembling and solidarizing a known quantity of sheets (L) in an amount constituting the at least one subgroup,
- subsequently forming said pack (P) by stacking one or more of said solidarized subgroups (SG1; SG2) together with a plurality of non-solidarized sheets (L) in the quantity necessary to reach said predetermined number of metallic sheets (L),
- applying welding beads (W) to the pack (P) constituted by the one or more of said solidarized subgroups (SG1, SG2) and said plurality of non-solidarized sheets.

2. Method according to claim 1, wherein said subgroups (SG1; SG2) of sheets are arranged at one or both opposite ends of the pack of sheets.

3. Method according to claim 1 **characterized by** realizing the pack of sheets by orderly stacking of the following sequence:
- a first subgroup (SG1) of sheets provided with solidarizing substances (A1);
- a plurality of non-solidarized sheets (C) deposited in a subset of the total;
- a second subgroup (SG2) of sheets provided with solidarizing substances (A2).

4. Method according to one or more of the preceding claims comprising an in-line process, wherein the assembling of the subgroups (SG1; SG2) of sheets takes place previously and separately from the forming of the pack (P) of sheets.

5. Method according to one or more of the preceding claims, wherein the substances of mutual adhesion (A1; A2) are pre-activated in their solidarizing action or can be activated when subjected to known specific environmental conditions.

6. Method according to one or more of the preceding claims, wherein at least part of the sheets constituting said one or more subgroups (SG1; SG2) are pretreated with one or a combination of said mutual adhesion substances (A1; A2).

7. Method according to one or more of the preceding claims, wherein said adhesion substances (A1; A2) are chosen as a combination of:
- cyanoacrylate adhesives;
- epoxy adhesives;
- hot melt adhesives;
- semi-solid anaerobic adhesives;
- two or more component adhesives.

8. Plant for the automated production of packs of sheets (P) constituting rotors or stators of electric machines by stacking and welding a predefined number of single metal sheets (L), comprising:
- at least one vertical magazine (33) for at least one stack of sheets (331) overlapping each other;
- a station for selecting and separating blocks (34) of sheets in a known quantity from said stack of sheets;
- at least one assembly station (35) for packs (P) of sheets constituting an electric machine armature, in which at least two blocks of sheets are arranged axially aligned and coincident with each other, one on top of the other, said assembly station (35) comprising:
-- an assembly magazine (3) for packs of sheets formed by at least one or more blocks of sheets, which magazine (3) is provided with centering guides for said sheets;
-- an axial presser (343) of the sheets of the block or blocks of sheets unloaded into the assembly magazine (3);
- at least one joining station (36) for the stable connection of the packs (P) of sheets present in the assembly magazine (3) and in the condition pressed together, comprising devices such as one or more welders that generate one or more welding beads (W) in the axial direction of the packs (P) of sheets in the assembly magazine (3), said one or more welders being supported movable along guides parallel to the axis of the packs (P) of sheets and/or on guides that are radial with respect to said axis, alternatively at a working distance and at a rest distance, or the assembly magazine (3) being rotatable around an axis so as to rotate the pack of sheets with respect to said one or more welders;
- - members for transferring the blocks of sheets from the selection and separation station (34) to the said assembly station (35) in which at least two blocks of sheets are arranged one on the other, axially aligned and coincident with each other;
- - an unloading station (39) for said packs of sheets after the mutual stable connection of the sheets to each other;
which plant operates in accordance with the method of steps 1 to 7 and it comprises a station for grouping (31) of subgroups of sheets (SG1; SG2) intended to form part of said pack (P) of sheets, which grouping station (31) comprises at least the following substations:
- a substation for selecting, separating and picking up a predefined number of sheets from at least one magazine;
- a stacking substation of sheets to form the subgroup of sheets (SG1; SG2) composed of the sheets taken in the previous step;
- a transfer substation to said assembly station (35) of one or more subgroups of sheets (SG1; SG2) grouped together as in the previous step;
being one or more of the sheets of said subgroup (SG1; SG2) provided with at least one substance of mutual adhesion (A1; A2) for the solidarization of the subgroup of sheets, which adhesive substance can be interposed between the sheets before or during the grouping process or already previously applied to at least a part of the sheets, wherein said assembly station (35) comprises a further substation for the solidarization of the said subgroup of sheets (SG1, SG2), said solidarization being performed previously to the application of said welding bead (W).

9. Plant according to claim 8, **characterized in that** said grouping station (31) comprises the further substation for solidarizing said subgroup (SG1; SG2) of sheets.

10. Plant according to one or more of the preceding claims 8 to 9, wherein said grouping station (31) comprises a further substation for the interposition of one or more adhesion substances between the elements of the stack which forms the subgroup of sheets.

11. Plant according to one or more of the preceding claims 8 to 10, wherein a second grouping station (31') of subgroups of sheets (SG2) is provided, operating according to one or more of the features of said grouping station (31), which second grouping station realizes a second subgroup of sheets (SG2) also intended to compose said pack (P) of sheets.

12. Plant according to one or more of the preceding claims 8 to 11, wherein one or two subgroups of sheets (SG1; SG2) are transferred to said assembly station (35) in such a sequence as to arrange them at one or both ends of the pack (P) of sheets.

13. Plant according to one or more of the preceding claims 8 to 12, **characterized by** the fact that the selection, separation and pick-up substation is equipped with pick-up means of the mechanical and/or magnetic type and/or operating by suction cup effect, being said means of the mechanical type used for picking up the loose sheets and said means of the magnetic type or operating by suction cup effect being used for picking up the subgroups of sheets that are already provided with solidarizing substances or prior to the application of the solidarizing material.

14. Plant according to one or more of the preceding claims 8 to 13, wherein said selection and separation station (34) comprises:
- a radial clamping gripper for blocks of sheets of known quantity coming from a stack (331), which can be switched alternatively in the clamping condition of at least part of the sheets of a stack of sheets and in a condition of non-interference with the sheets;
- translators of said clamping gripper for positioning said gripper relative to the end of said stack of sheets corresponding to a predetermined number of sheets;
- a detaching or scraper nail or finger that can be moved along a path with which said finger or said nail separates the sheets erroneously adhering to a sheet of the block of sheets intended to be the last sheet of said block, being the said one or more possible last sheets precariously tightened for a part of their thickness or moderately adhering to the lower sheet of the block of sheets while they are instead intended to constitute the first sheet of the stack of sheets facing the separated block of sheets, where the said detaching or scraper nail or finger cooperate with an axial band of the perimeter of the sheets of the block of sheets coinciding with a single point of the perimeter of the said sheets, and a separator knife being provided which is moveable supported in a radial direction with respect to the axis of the block or stack of sheets and in a position coincident or adjacent to said axial band of the perimeter of the sheets, and which knife is supported further angularly displaceable around the axis of the block or stack of sheets on a path along at least part of the outer perimeter of said sheets, a control unit being provided which activates said translators, said gripper, said scraper finger or nail and said separator knife and which carries out a control program which comprises instructions for performing the functions provided by the method according to one or more of the preceding claims.

15. Plant according to claim 14, **characterized in that** the said sheets (L) have a plan shape which can be inscribed in a circle, while the said knife is supported angularly displaceable on a path corresponding to an arc of a circle coaxial to the axis of said circle.

16. Plant according to one or more of the preceding claims 9 to 15, wherein the selection and separation station (34) is provided at the upper end of the stack of sheets (331), at a predetermined distance therefrom.

## Patentansprüche

1. Verfahren zur Herstellung von Paketen (P) aus Metallblechen, die Rotoren oder Statoren elektrischer Maschinen bilden, durch Stapeln und stabiles Verbinden einer vorbestimmten Anzahl von Metallblechen (L) entlang mindestens zwei Schweißraupen (W), die einander gegenüberliegen oder in unterschiedlichen Winkelpositionen angeordnet sind, umfassend folgende Schritte:
- Bereitstellen, für mindestens eine Untergruppe (SG1; SG2) der das Blechpaket (P) bildenden Bleche, zumindest in einem Bereich der gegenseitigen Kontaktflächen der Bleche, von Substanzen zur gegenseitigen Haftung (A1; A2) zur Verblockung der Bleche der Untergruppe, wobei diese Substanzen durch eine chemischphysikalische Einwirkung aktivierbar sind,
wobei die gegenseitige Verblockung der Bleche der mindestens einen Untergruppe (SG1; SG2) von Blechen vor dem Stapeln mit den verbleibenden Blechen des Blechpakets (P) erfolgt,
wobei die mindestens eine Untergruppe (SG1; SG2) von Blechen getrennt vom Blechpaket (P) ausgewählt, zusammengefügt und verblockt wird,
wobei Schritte zum Aufnehmen, Zusammenfügen und Verblocken einer bekannten Anzahl von Blechen (L) in einer die mindestens eine Untergruppe bildenden Menge vorgesehen sind,
- anschließend Bilden des Blechpakets (P) durch Stapeln einer oder mehrerer der verblockten Untergruppen (SG1; SG2) zusammen mit einer Mehrzahl nicht verblockter Bleche (L) in der zur Erreichung der genannten vorbestimmten Anzahl von Blechen (L) erforderlichen Anzahl,
- Aufbringen von Schweißraupen (W) auf das Paket (P), das aus der einen oder den mehreren verblockten Untergruppen (SG1; SG2) und der Mehrzahl nicht verblockter Bleche besteht.

2. Verfahren nach Anspruch 1, wobei die genannten Untergruppen (SG1; SG2) von Blechen an einem oder beiden gegenüberliegenden Enden des Blechpakets angeordnet sind.

3. Verfahren nach Anspruch 1, **dadurch gekennzeichnet, dass** das Blechpaket durch das geordnete Stapeln der folgenden Abfolge gebildet wird:
- einer ersten Untergruppe (SG1) von Blechen, die mit Substanzen (A1) zur Verblockung versehen sind;
- einer Mehrzahl nicht verblockter Bleche (C), die in einer Teilmenge der Gesamtmenge angeordnet sind;
- einer zweiten Untergruppe (SG2) von Blechen, die mit Substanzen (A2) zur Verblockung versehen sind.

4. Verfahren nach einem oder mehreren der vorhergehenden Ansprüche, das einen Inline-Prozess umfasst, wobei das Zusammenfügen der Untergruppen (SG1; SG2) von Blechen vorab und getrennt von der Bildung des Blechpakets (P) erfolgt.

5. Verfahren nach einem oder mehreren der vorhergehenden Ansprüche, wobei die Substanzen zur gegenseitigen Haftung (A1; A2) hinsichtlich ihrer Verblockungswirkung voraktiviert sind oder aktivierbar sind, wenn sie bekannten spezifischen Umgebungsbedingungen ausgesetzt werden.

6. Verfahren nach einem oder mehreren der vorhergehenden Ansprüche, wobei zumindest ein Teil der Bleche, die die eine oder mehreren Untergruppen (SG1; SG2) bilden, mit einer der Substanzen zur gegenseitigen Haftung (A1; A2) oder einer Kombination davon vorbehandelt wird.

7. Verfahren nach einem oder mehreren der vorhergehenden Ansprüche, wobei die Haftungs-Substanzen (A1; A2) als Kombination von:
Cyanacrylatklebstoffen;
Epoxidklebstoffen;
Schmelzklebstoffen;
halbfesten anaeroben Klebstoffen;
Klebstoffen aus zwei oder mehr Komponenten, ausgewählt werden.

8. Anlage zur automatisierten Herstellung von Blechpaketen (P), die Rotoren oder Statoren elektrischer Maschinen bilden, durch Stapeln und Verschweißen einer vorbestimmten Anzahl einzelner Metallbleche (L), umfassend:
- mindestens ein vertikales Magazin (33) für mindestens einen Stapel von übereinanderliegenden Blechen (331); - eine Station zum Auswählen und Abtrennen von Blechblöcken (34) mit einer bekannten Anzahl von Blechen aus dem Stapel;
- mindestens eine Zusammenfügestation (35) für Blechpakete (P), die den Anker einer elektrischen Maschine bilden, in der mindestens zwei Blechblöcke axial ausgerichtet und deckungsgleich übereinander angeordnet sind, wobei die Zusammenfügestation (35) umfasst:
-- ein Zusammenfügemagazin (3) für Blechpakete, die aus mindestens einem Blechblock oder mehreren Blechblöcken gebildet werden, wobei das Magazin (3) mit Zentrierführungen für die Bleche versehen ist;
-- eine axiale Pressvorrichtung (343) für die Bleche des Blechblocks oder der Blechblöcke, die in das Zusammenfügemagazin (3) entladen wurden;
- mindestens eine Verbindungsstation (36) zur dauerhaften Verbindung der im Zusammenfügemagazin (3) befindlichen und im zusammengepressten Zustand vorliegenden Blechpakete (P), umfassend Vorrichtungen wie beispielsweise eine oder mehrere Schweißvorrichtungen, die eine oder mehrere Schweißraupen (W) in Axialrichtung der im Zusammenfügemagazin (3) befindlichen Blechpakete (P) erzeugen, wobei eine oder mehrere Schweißvorrichtungen entlang von Führungen, die parallel zur Achse der Blechpakete (P) verlaufen, und/oder entlang von Führungen, die radial zu dieser Achse verlaufen, beweglich gelagert und zwischen einem Arbeitsabstand und einem Ruheabstand hin- und herbewegbar sind, oder wobei das Zusammenfügemagazin (3) derart um eine Achse drehbar ist, dass das Blechpaket relativ zu der einen oder den mehreren Schweißvorrichtungen gedreht wird;
-- Einrichtungen zum Überführen der Blechblöcke von der Auswahl- und Abtrennstation (34) zu der Zusammenfügestation (35), in der mindestens zwei Blechblöcke axial ausgerichtet und deckungsgleich übereinander angeordnet sind;
-- eine Entladestation (39) für die genannten Blechpakete nach der dauerhaften Verbindung der Bleche miteinander;
wobei die Anlage nach dem Verfahren gemäß den Schritten 1 bis 7 arbeitet und eine Gruppierstation (31) für Untergruppen von Blechen (SG1; SG2) umfasst, die dazu bestimmt sind, einen Teil des genannten Blechpakets (P) zu bilden, wobei die Gruppierstation (31) mindestens die folgenden Unterstationen umfasst:
- eine Unterstation zum Auswählen, Abtrennen und Aufnehmen einer vorbestimmten Anzahl von Blechen aus mindestens einem Magazin;
- eine Unterstation zum Stapeln von Blechen zur Bildung der Untergruppe von Blechen (SG1; SG2), die aus den im vorhergehenden Schritt aufgenommenen Blechen besteht;
- eine Unterstation zum Überführen einer oder mehrerer im vorhergehenden Schritt zusammengefügter Untergruppen von Blechen (SG1; SG2) zu der genannten Zusammenfügestation (35);
wobei eines oder mehrere der Bleche der Untergruppe (SG1; SG2) mit mindestens einer Substanz zur gegenseitigen Haftung (A1; A2) zur Verblockung der Untergruppe von Blechen versehen sind, wobei diese Haftungssubstanz vor oder während des Gruppierungsvorgangs zwischen die Bleche eingebracht oder bereits zuvor zumindest auf einen Teil der Bleche aufgebracht werden kann, wobei die Zusammenfügestation (35) eine weitere Unterstation zur Verblockung der genannten Untergruppe von Blechen (SG1; SG2) umfasst, wobei diese Verblockung vor dem Aufbringen der Schweißraupe (W) durchgeführt wird.

9. Anlage nach Anspruch 8, **dadurch gekennzeichnet, dass** die Gruppierstation (31) die weitere Unterstation zur Verblockung der genannten Untergruppe von Blechen (SG1; SG2) umfasst.

10. Anlage nach einem oder mehreren der vorhergehenden Ansprüche 8 bis 9, wobei die genannte Gruppierstation (31) eine weitere Unterstation zum Einbringen einer oder mehrerer Haftungssubstanzen zwischen die Elemente des Stapels umfasst, der die Untergruppe von Blechen bildet.

11. Anlage nach einem oder mehreren der vorhergehenden Ansprüche 8 bis 10, wobei eine zweite Gruppierstation (31') für Untergruppen von Blechen (SG2) vorgesehen ist, die nach einem oder mehreren der Merkmale der Gruppierstation (31) arbeitet, wobei diese zweite Gruppierstation eine zweite Untergruppe von Blechen (SG2) bildet, die ebenfalls zur Zusammenstellung des Blechpakets (P) bestimmt ist.

12. Anlage nach einem oder mehreren der vorhergehenden Ansprüche 8 bis 11, wobei eine oder zwei Untergruppen von Blechen (SG1; SG2) in einer solchen Reihenfolge zu der Zusammenfügestation (35) überführt werden, dass sie an einem oder beiden Enden des Blechpakets (P) angeordnet werden.

13. Anlage nach einem oder mehreren der vorhergehenden Ansprüche 8 bis 12, **dadurch gekennzeichnet, dass** die Auswahl-, Abtrenn- und Aufnahme-Unterstation mit mechanischen und/oder magnetischen und/oder nach dem Saugnapfprinzip arbeitenden Aufnahmemitteln versehen ist, wobei die Mittel mechanischer Art zum Aufnehmen loser Bleche verwendet werden und die Mittel magnetischer Art oder die nach dem Saugnapfprinzip arbeitenden Mittel zum Aufnehmen von Untergruppen von Blechen verwendet werden, die bereits mit Substanzen zur Verblockung oder vor dem Auftragen des Verblockungsmaterials versehen sind.

14. Anlage nach einem oder mehreren der vorhergehenden Ansprüche 8 bis 13, wobei die Auswahl- und Abtrennstation (34) Folgendes umfasst:
- einen radialen Klemmgreifer für Blechblöcke mit einer bekannten Anzahl von aus einem Stapel (331) stammenden Blechen, wobei der Klemmgreifer wahlweise in einen Klemmzustand, in dem mindestens ein Teil der Bleche eines Blechstapels festgeklemmt wird, und in einen Zustand ohne Eingriff mit den Blechen schaltbar ist;
- Verfahrvorrichtungen für den Klemmgreifer, um den Greifer relativ zum Ende des Blechstapels zu positionieren, das einer vorbestimmten Anzahl von Blechen entspricht;
- einen Ablöse- oder Abstreifnagel bzw. -finger, der entlang einer Bahn bewegbar ist, mit dem der Finger oder der Nagel die Bleche abtrennt, die fälschlicherweise an einem Blech haften, das als letztes Blech des genannten Blechblocks vorgesehen ist, wobei das eine oder die mehreren möglichen letzten Bleche über einen Teil ihrer Dicke nur vorläufig festgehalten werden oder mäßig an dem darunterliegenden Blech des Blechblocks haften, obwohl sie eigentlich dazu bestimmt sind, das erste Blech des dem abgetrennten Blechblock zugewandten Blechstapels zu bilden, wobei der Ablöse- oder Abstreifnagel bzw. -finger mit einem axialen Umfangsstreifen der Bleche des Blechblocks zusammenwirkt, der einem einzelnen Punkt des Umfangs der Bleche entspricht, wobei ein Trennmesser vorgesehen ist, das in radialer Richtung relativ zur Achse des Blechblocks oder -stapels und in einer Position, die mit dem axialen Streifen am Umfang der Bleche übereinstimmt oder diesem benachbart ist, beweglich gelagert ist, und wobei das Messer außerdem um die Achse des Blechblocks oder des Blechstapels auf einer Bahn entlang zumindest eines Teils des Außenumfangs der Bleche verschwenkbar gelagert ist, wobei eine Steuereinheit vorgesehen ist, die die Verfahrvorrichtungen, den Greifer, den Abstreiffinger bzw. -nagel und das Trennmesser steuert und ein Steuerprogramm ausführt, das Anweisungen zur Durchführung der im Verfahren nach einem oder mehreren der vorhergehenden Ansprüche vorgesehenen Funktionen umfasst.

15. Anlage nach Anspruch 14, **dadurch gekennzeichnet, dass** die Bleche (L) eine in eine Kreisfläche einschreibbare Grundrissform aufweisen, während das genannte Messer auf einer Bewegungsbahn, die einem Kreisbogen koaxial zur Achse des genannten Kreises entspricht, verschwenkbar gelagert ist.

16. Anlage nach einem oder mehreren der vorhergehenden Ansprüche 9 bis 15, wobei die Auswahl- und Abtrennstation (34) am oberen Ende des Blechstapels (331) in einem vorbestimmten Abstand von diesem angeordnet ist.

## Revendications

1. Méthode de réalisation de paquets (P) de tôles métalliques formant des rotors ou des stators de machines électriques, par empilement et assemblage de manière stable d'un nombre prédéterminé de tôles métalliques (L) le long d'au moins deux cordons de soudure (W) opposés l'un à l'autre ou situés à des positions angulaires différentes, comprenant les étapes de
- prévoir, pour au moins un sous-groupe (SG1 ; SG2) desdites tôles constituant ledit paquet (P) de tôles, au moins au niveau d'une zone des surfaces de contact mutuel des tôles, des substances d'adhésion mutuelle (A1 ; A2) pour la solidarisation des tôles du sous-groupe, lesquelles substances peuvent être activées par une action physico-chimique,
où la solidarisation réciproque des tôles de l'au moins un sous-groupe (SG1 ; SG2) de tôles est effectuée avant l'empilage avec les tôles restantes du paquet (P),
l'au moins un sous-groupe (SG1 ; SG2) de tôles étant sélectionné, assemblé et solidarisé séparément du paquet (P),
étant prévues des étapes de prélever, assembler et solidariser une quantité connue de tôles (L) en une quantité constituant l'au moins un sous-groupe,
- ensuite former ledit paquet (P) en empilant un ou plusieurs desdits sous-groupes solidarisés (SG1 ; SG2) avec une pluralité de tôles non solidarisées (L), en quantité nécessaire pour atteindre ledit nombre prédéterminé de tôles métalliques (L),
- appliquer des cordons de soudure (W) sur le paquet (P) constitué par l'un ou plusieurs desdits sous-groupes solidarisés (SG1, SG2) et par ladite pluralité de tôles non solidarisées.

2. Méthode selon la revendication 1, où lesdits sous-groupes (SG1 ; SG2) de tôles sont disposés au niveau d'une ou des deux extrémités opposées du paquet de tôles.

3. Méthode selon la revendication 1, **caractérisée par** la réalisation du paquet de tôles en empilant de manière ordonnée selon la séquence suivante :
- un premier sous-groupe (SG1) de tôles pourvues de substances de solidarisation (A1) ;
- une pluralité de tôles non solidarisés (C) déposées dans un sous-ensemble du total ;
- un deuxième sous-groupe (SG2) de tôles pourvues de substances de solidarisation (A2).

4. Méthode selon une ou plusieurs des revendications précédentes, comprenant un processus en ligne, où l'assemblage des sous-groupes (SG1 ; SG2) de tôles a lieu auparavant et séparément de la formation du paquet (P) de tôles.

5. Méthode selon une ou plusieurs des revendications précédentes, où les substances d'adhésion mutuelle (A1 ; A2) sont pré-activées dans leur action de solidarisation ou peuvent être activées lorsqu'elles sont soumises à des conditions environnementales spécifiques connues.

6. Méthode selon une ou plusieurs des revendications précédentes, où au moins une partie des tôles constituant lesdits un ou plusieurs sous-groupes (SG1 ; SG2) est pré-traitée avec une ou une combinaison desdites substances d'adhésion mutuelle (A1 ; A2).

7. Méthode selon une ou plusieurs des revendications précédentes, où lesdites substances d'adhésion (A1 ; A2) sont choisies comme une combinaison de :
- adhésifs cyanoacrylates ;
- adhésifs époxy ;
- adhésifs thermofusibles ;
- adhésifs anaérobies semi-solides ;
- adhésifs à deux composants ou plus.

8. Installation pour la production automatisée de paquets de tôles (P) constituant des rotors ou des stators de machines électriques, par empilement et soudage d'un nombre prédéfini de tôles métalliques individuelles (L), comprenant :
- au moins un magasin vertical (33) pour au moins une pile de tôles (331) superposées les unes aux autres ;
- une station pour sélectionner et séparer des blocs (34) de tôles, en quantité connue, de ladite pile de tôles ;
- au moins une station d'assemblage (35) pour des paquets (P) de tôles constituant un induit d'une machine électrique, dans lequel au moins deux blocs de tôles sont disposés de manière axialement alignée et coïncidents l'un avec l'autre, superposés l'un sur l'autre, ladite station d'assemblage (35) comprenant :
- - un magasin d'assemblage (3) pour paquets de tôles formés d'au moins un ou plusieurs blocs de tôles, lequel magasin (3) est muni de guides de centrage pour lesdites tôles ;
- - un presseur axial (343) des tôles du bloc ou des blocs de tôles déchargés dans le magasin d'assemblage (3) ;
- au moins une station d'assemblage (36) pour la liaison stable des paquets (P) de tôles présents dans le magasin d'assemblage (3) et se trouvant à l'état comprimé entre eux, comprenant des dispositifs tels qu'une ou plusieurs soudeuses qui génèrent un ou plusieurs cordons de soudure (W) dans la direction axiale des paquets (P) de tôles dans le magasin d'assemblage (3), lesdites une ou plusieurs soudeuses étant supportées de manière mobile le long de guides parallèles à l'axe des paquets (P) de tôles et/ou sur des guides qui sont radiaux par rapport audit axe, alternativement à une distance de travail et à une distance de repos, ou le magasin d'assemblage (3) pouvant tourner autour d'un axe de manière à faire tourner le paquet de tôles par rapport auxdites une ou plusieurs soudeuses ;
- - des éléments pour transférer les blocs de tôles depuis la station de sélection et de séparation (34) vers ladite station d'assemblage (35), dans laquelle au moins deux blocs de tôles sont disposés l'un sur l'autre, alignés axialement et coïncidant l'un avec l'autre ;
- - une station de déchargement (39) pour lesdits paquets de tôles, une fois que le tôles ont été solidement reliées les unes aux autres ;
laquelle installation fonctionne selon la méthode des étapes 1 à 7 et comprend une station de regroupement (31) de sous-groupes (SG1 ; SG2) de tôles destinés à faire partie dudit paquet (P) de tôles, laquelle station de regroupement (31) comprend au moins les sous-stations suivantes :
- une sous-station pour sélectionner, séparer et prélever un nombre prédéfini de tôles à partir d'au moins un magasin ;
- une sous-station d'empilage de tôles pour former le sous-groupe (SG1 ; SG2) de tôles composé des tôles prélevées à l'étape précédente ;
- une sous-station de transfert vers ladite station d'assemblage (35) d'un ou plusieurs sous-groupes (SG1 ; SG2) de tôles regroupés entre eux comme à l'étape précédente ;
une ou plusieurs des tôles dudit sous-groupe (SG1 ; SG2) étant pourvues d'au moins une substance d'adhésion mutuelle (A1 ; A2) pour la solidarisation du sous-groupe de tôles, laquelle substance adhésive peut être interposée entre les tôles avant ou pendant le processus de regroupement, ou être déjà appliquée sur au moins une partie des tôles, où ladite station d'assemblage (35) comprend une sous-station supplémentaire pour la solidarisation dudit sous-groupe (SG1, SG2) de tôles, ladite solidarisation étant effectuée avant l'application dudit cordon de soudure (W).

9. Installation selon la revendication 8, **caractérisée en ce que** ladite station de regroupement (31) comprend la sous-station supplémentaire pour solidariser ledit sous-groupe (SG1 ; SG2) de tôles.

10. Installation selon une ou plusieurs des revendications précédentes 8 à 9, où ladite station de regroupement (31) comprend une sous-station supplémentaire pour l'interposition d'une ou plusieurs substances d'adhésion entre les éléments de la pile qui forme le sous-groupe de tôles.

11. Installation selon une ou plusieurs des revendications précédentes 8 à 10, où est prévue une deuxième station de regroupement (31') de sous-groupes (SG2) de tôles, fonctionnant selon une ou plusieurs des caractéristiques de ladite station de regroupement (31), laquelle deuxième station de regroupement réalise un deuxième sous-groupe (SG2) de tôles également destiné à composer ledit paquet (P) de tôles.

12. Installation selon une ou plusieurs des revendications précédentes 8 à 11, où un ou deux sous-groupes (SG1 ; SG2) de tôles sont transférés vers ladite station d'assemblage (35) selon une séquence permettant de les disposer au niveau d'une des extrémités ou des deux extrémités du paquet (P) de tôles.

13. Installation selon une ou plusieurs des revendications précédentes 8 à 12, **caractérisée en ce que** la sous-station de sélection, de séparation et de prélèvement est équipée de moyens de prélèvement de type mécanique et/ou magnétique et/ou fonctionnant par effet de ventouse, lesdits moyens de type mécanique étant utilisés pour prélever les tôles en vrac et lesdits moyens de type magnétique ou fonctionnant par effet de ventouse étant utilisés pour prélever les sous-groupes de tôles qui sont déjà pourvus de substances de solidarisation ou avant l'application du matériau de solidarisation.

14. Installation selon une ou plusieurs des revendications précédentes 8 à 13, où ladite station de sélection et de séparation (34) comprend :
- une pince de serrage radiale destinée à des blocs de tôles en quantité connue provenant d'une pile (331) et qui peut être commutée alternativement entre un état de serrage d'au moins une partie des tôles d'une pile de tôles et un état de non-interférence avec les tôles ;
- des dispositifs de déplacement de ladite pince de serrage pour positionner ladite pince par rapport à l'extrémité de ladite pile de tôles correspondant à un nombre prédéterminé de tôles ;
- un onglet ou un doigt de détachement ou de raclage pouvant être déplacé le long d'un parcours, par lequel ledit doigt ou ledit onglet sépare les tôles adhérant par erreur à une tôle du bloc de tôles destinée à être la dernière tôle dudit bloc, lesdites une ou plusieurs dernières tôles possibles étant serrées de manière précaire sur une partie de leur épaisseur ou adhérant modérément à la tôle inférieure du bloc de tôles, alors qu'elles sont au contraire destinées à constituer la première tôle de la pile de tôles faisant face au bloc de tôles séparé, où lesdits onglet ou doigt de détachement ou de raclage coopèrent avec une bande axiale du périmètre des tôles du bloc de tôles, coïncidant avec un seul point du périmètre desdites tôles, et étant prévu un couteau séparateur, qui est supporté de manière à pouvoir se déplacer dans une direction radiale par rapport à l'axe du bloc ou de la pile de tôles et dans une position coïncidant ou adjacente à ladite bande axiale du périmètre des tôles, et lequel couteau est en outre supporté de manière à pouvoir se déplacer angulairement autour de l'axe du bloc ou de la pile de tôles selon un parcours le long d'au moins une partie du périmètre extérieur desdites tôles, étant prévue une unité de commande, qui active lesdits dispositifs de déplacement, ladite pince, ledit doigt ou onglet de raclage et ledit couteau séparateur, et qui exécute un programme de commande comprenant des instructions pour exécuter les fonctions prévues par la méthode selon l'une ou plusieurs des revendications précédentes.

15. Installation selon la revendication 14, **caractérisée en ce que** lesdites tôles (L) présentent une forme en plan qui peut être inscrite dans un cercle, tandis que ledit couteau est supporté de manière à pouvoir se déplacer angulairement sur un parcours correspondant à un arc de cercle coaxial à l'axe dudit cercle.

16. Installation selon une ou plusieurs des revendications précédentes 9 à 15, où la station de sélection et de séparation (34) est disposée au niveau de l'extrémité supérieure de la pile de tôles (331), à une distance prédéterminée de celle-ci.
